(19) Europäisches Patentamt
European Patent Office
Office européen des brevets

(11) EP 0 767 589 B1

(12) **EUROPEAN PATENT SPECIFICATION**

(45) Date of publication and mention
of the grant of the patent:
**07.11.2007 Bulletin 2007/45**

(51) Int Cl.:
***H04N 9/45*** *(2006.01)*

(21) Application number: **96304876.4**

(22) Date of filing: **02.07.1996**

(54) **Clock signal generator**

Taktsignalgenerator

Générateur de signal d'horloge

(84) Designated Contracting States:
**DE GB NL**

(30) Priority: **06.10.1995 KR 9534326**

(43) Date of publication of application:
**09.04.1997 Bulletin 1997/15**

(73) Proprietor: **SAMSUNG ELECTRONICS CO. LTD.**
**Kyungki-do,**
**Seoul (KR)**

(72) Inventor: **Kim, Young-Chul**
**Seoul (KR)**

(74) Representative: **O'Connell, David Christopher**
**HASELTINE LAKE,**
**Redcliff Quay**
**120 Redcliff Street**
**Bristol BS1 6HU (GB)**

(56) References cited:
**EP-A- 0 460 964**       **US-A- 4 860 089**
**US-A- 5 025 310**

• **PATENT ABSTRACTS OF JAPAN vol. 15, no. 311**
**(E-1098), 8 September 1991 & JP 03 113975 A**
**(CANON INC), 15 May 1991**

## Description

BACKGROUND OF THE INVENTION

1. Field of the Invention

The present invention relates to a clock signal generator for digital television receivers, video tape recorders and the like, and more particularly to a clock signal generator which is used for horizontal synchronizing signal generators and signal processors.

2. Description of the Prior Art

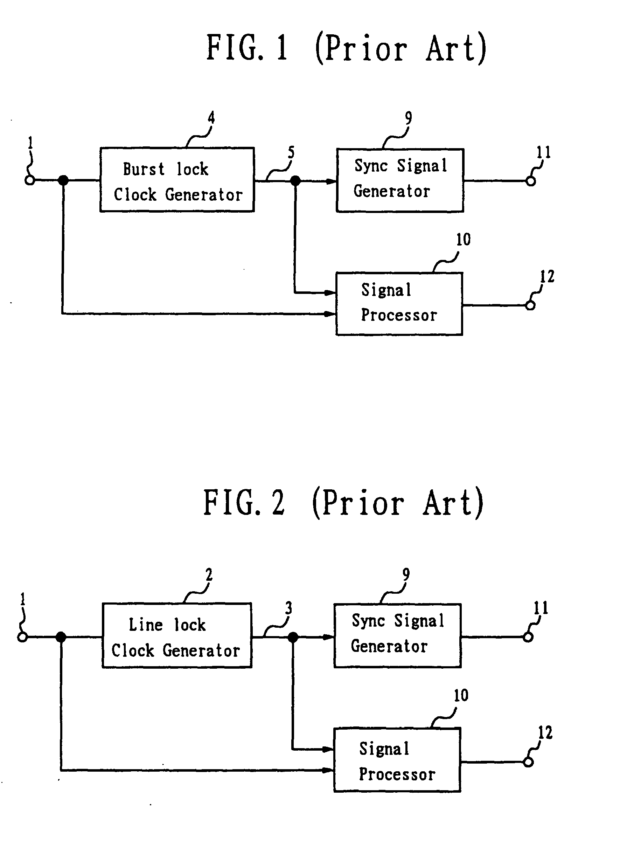

Referring to Figs. 1 and 2 which illustrate a block diagram of a conventional clock generator, respectively, the reference numeral 1 designates a video signal input terminal, 2 a line lock clock generator, 3 a line lock clock signal which is generated in synchronism with a horizontal synchronizing signal contained in an input video signal, 4 a burst lock clock generator, 5 a burst lock clock signal which is generated in synchronism with a color burst signal contained in the input video signal, 9 a synchronizing signal generator, 10 a signal processor, 11 a synchronizing signal output terminal, and 12 a video signal output terminal.

Referring to Fig. 1, the burst lock clock generator 4 generates the stable burst lock clock signal 5 by using a crystal oscillator(not shown), the burst lock clock signal 5 being synchronized with the color burst signal contained in the input video signal supplied through the video signal input terminal 1. The input video signal is a signal which is in accordance with a standard television broadcasting system(hereinafter referred to as "standard signal"). In an NTSC system, the relation between the frequency $f_{sc}$ of the color burst signal contained in the standard signal and the frequency $f_H$ of the horizontal synchronizing signal can be expressed in the following equation.

$$fsc = \frac{455}{2} f_H$$

The synchronizing signal generator 9 receives the burst lock clock signal 5 supplied from the burst lock clock generator 4 and generates a synchronizing signal by using the relation expressed by the above equation.

The signal processor 10 receives both the input video signal supplied through the video signal input terminal 1 and the burst lock clock signal 5 supplied from the burst lock clock generator 4, and performs signal processing on the video signal by using the relation expressed by the above equation to thereby improve the image quality of the video signal. An example of such a conventional circuit for improving the image quality of the video signal is disclosed in Japanese Patent Laid-open Gazette No. 62-268274.

Referring now to Fig. 2, the line lock clock generator 2 generates the line lock clock signal 3 which is synchronized with a horizontal synchronizing signal contained in an input video signal supplied through the video signal input terminal 1.

The synchronizing signal generator 9 receives the line lock clock signal 3 supplied from the line lock clock generator 2, and generates a synchronizing signal.

The signal processor 10 receives both the video signal supplied through the video signal input terminal 1 and the line lock clock signal 3 supplied from the line lock clock generator 2, and performs signal processing on the input video signal. An example of such a conventional circuit as shown in Fig. 2 is disclosed in Japanese Patent Laid-open Gazette No. 63-193783.

The clock generator of Fig. 1 using a burst lock method has an advantage in that not only a very stable synchronizing signal can be generated but also image quality of an input video signal can be improved when the input video signal is a standard signal. However, when the input video signal is a non-standard signal which does not satisfy the relation expressed by the above equation, for example, such as a video signal reproduced by a video tape recorder, it is impossible to improve the image quality because the input video signal is not accurately synchronized with a clock signal.

The clock pulse generator of Fig. 2 using a line lock method has an advantage in that a synchronization of an input video signal with a clock signal can be made to a sufficient level to improve image quality even if a non-standard signal which does not satisfy the relation expressed by the above equation is supplied, because by detecting a horizontal synchronizing signal from the input video signal, the clock signal which is synchronized with the input video signal can be generated. However, if a standard signal which does not satisfy the relation expressed by the above equation is supplied, the image quality can not be improved to a sufficient level, because an accuracy of synchronization between the input video signal and the clock signal in Fig. 2 is lower than that in Fig. 1.

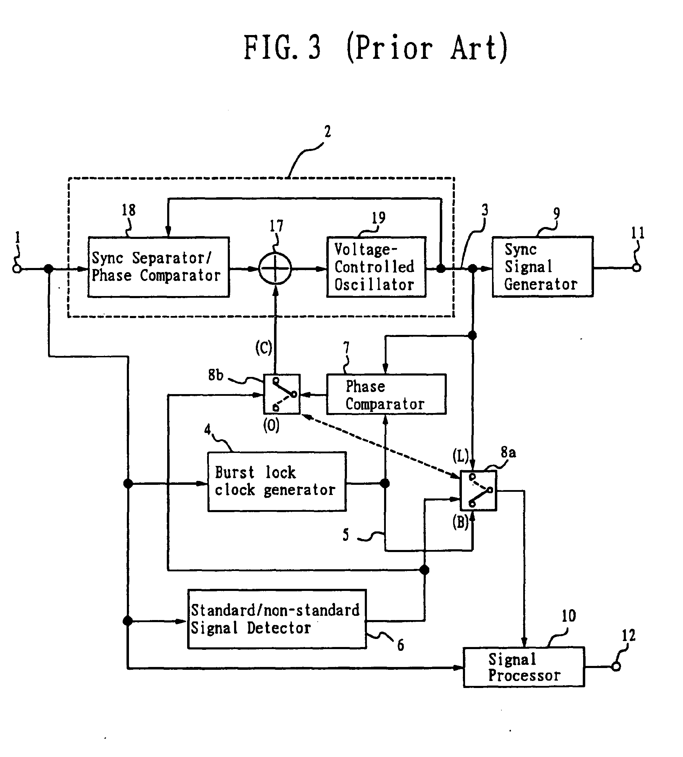

Fig. 3 illustrates a block diagram showing a conventional line lock/burst lock clock generator of the prior art.

Referring to Fig. 3, the reference numeral 1 designates a video signal input terminal, 2 a line lock clock generator, 3 a line lock clock signal, 4 a burst lock clock generator, 5 a burst lock clock signal, 6 a standard/non-standard signal detector, 7 a phase comparator, 8a and 8b switch, 9 a synchronizing signal generator, 10 a signal processor, 11 a synchronizing signal output terminal, 12 a video signal output terminal, 17 an adder, 18 a synchronizing signal separator/phase comparator, and 19 a voltage-controlled oscillator.

A video signal is supplied through the video signal input terminal 1, to the line lock clock generator 2, to the burst lock clock generator 4, and to the standard/non-standard signal detector 6. The line lock clock generator 2 separates a horizontal synchronizing signal contained in the video signal, and generates the line lock clock signal 3 having the frequency of 1820 times as high as the frequency $f_H$ of the horizontal synchronizing signal by using a phase-locked loop(PLL) circuit which includes the adder 17, the synchronizing signal separator/phase comparator 18, and the voltage-controlled oscillator 19.

The burst lock clock generator 4 separates a color burst signal contained in the video signal, and generates the burst lock clock signal 5 having a frequency of 8 times as high as the frequency $f_{sc}$ of the color burst signal by using a crystal oscillator(not shown) which is provided in the burst lock clock generator 4. Since the burst lock clock signal 5 is generated by the crystal oscillator as described above, the burst lock clock signal 5 becomes very stable.

The synchronizing signal generator 9 receives the line lock clock signal 3, generates a horizontal synchronizing signal of the input video signal by lowering the frequency of the line lock clock signal 3, and outputs the synchronizing signal through the synchronizing signal output terminal 11.

The standard/non-standard signal detector 6 judges whether or not the frequency $f_H$ of the horizontal synchronizing signal of the input video signal and the frequency $f_{sc}$ of the color burst signal satisfy the relation expressed by the above equation. When the relation expressed by the above equation is satisfied, the standard/non-standard signal detector 6 makes a decision that the input video signal is a standard signal. When the relation expressed by the above equation is not satisfied, the standard/non-standard signal detector 6 makes a decision that the input video signal is a non-standard signal.

The switch 8a receives the detection signal supplied from the standard/non-standard signal detector 6. When the input video signal is a non-standard signal, the switch 8a is turned or closed to the line lock clock(L) side, as shown by the dotted line in Fig. 3. On the contrary, when the input video signal is a standard signal, the switch 8a is turned or closed to the burst lock clock(B) side, as shown by the solid line in Fig. 3. Accordingly, either one of the line lock clock signal and the burst lock clock signal is supplied to the signal processor 10. The signal processor 10 receives the video signal from the video signal input terminal 1, and performs digital signal processing by using the clock signal supplied through the switch 8a to improve image quality. The processed video signal is sent out through the video signal output terminal 12.

The phase comparator 7 receives the line lock clock signal 3 and the burst lock clock signal 5, compares the two signals, and supplies a signal corresponding to the phase difference between the line lock clock signal 3 and the burst lock clock signal 5 to the other switch 8b which is interlocked with the switch 8a. Similarly to the switch 8a, the operation of the switch 8b is controlled based on the detection signal generated by the standard/non-standard signal detector 6. When the input video signal is a standard signal, the switch 8b is turned to the C side so as to be closed as shown by a solid line. On the contrary, when the input video signal is a non-standard signal, the switch 8b is turned to the O side so as to be opened as shown by a dotted line. Accordingly, the switch 8b serves to supply the output signal of the phase comparator 7 to the line lock clock generator 2 only when the input video signal is a standard signal.

The line lock/burst lock clock generator constructed as mentioned above is disclosed in U.S. Patent No. 5,025,310, and can eliminate the disadvantages of the circuits shown in Figs. 1 and 2, in which a line lock method and a burst lock method are adopted, respectively. However, the line lock/burst lock clock generator still has a disadvantage in that there is a possibility for a noise to be generated when the input video signal changes from a standard signal to a non-standard signal or from a non-standard signal to a standard signal, that is, at the moment when a line lock clock signal and a burst lock clock signal are switched by the switch 8a, and that the construction is complicated due to an addition of the standard/non-standard signal detector and switches.

## SUMMARY OF THE INVENTION

Therefore, the present invention has been made in view of the above-described problems occurring in the prior art, and an object of the present invention is to provide a clock signal generator which can generate a clock signal accurately synchronized with an input video signal by simultaneously using a line lock method and a burst lock method.

Another object of the present invention is to provide a clock signal generator which has a simple structure.

According to one aspect of the present invention, there is provided a clock signal generator comprising: a clock signal generator comprising: a) synchronizing separation means for separating a horizontal synchronizing signal from an input composite video signal; b) burst separation means for separating a color burst signal from said input composite video signal; characterised by c) phase error detection means for receiving said horizontal synchronizing signal, detecting a phase error between a previously inputted composite video signal and a standard video signal and outputting a phase error signal for a previous horizontal period; d) phase change detection means for receiving said color burst signal, detecting a phase change of said color burst signal by evaluating a phase change between the front end and the rear end of the color burst signal, and outputting a phase change signal for a present horizontal period; e) adding means for adding said phase error signal and said phase change signal; and f) clock signal generation means for receiving an output of said adding means and generating a clock signal which is synchronized with said input composite video signal.

According to another aspect of the present invention, said clock signal generation means evaluates an average value of said output of the said adding means, and generates said clock signal in response to said average value.

According to another aspect, there is provided a method for generating a clock signal synchronized with a composite video signal having a horizontal synchronizing signal and a color burst signal, said method comprising the steps of: a) separating a horizontal synchronizing signal from an input composite video signal; b) separating a color burst signal from said input composite video signal; characterised by the steps of: c) receiving said horizontal synchronizing signal, detecting a phase error between a previously inputted composite video signal and a standard video signal, and outputting a phase error signal for a previous horizontal period; d) receiving said color burst signal, detecting a phase change of said color burst signal by evaluating a phase change between the front end and the rear end of the color burst signal, and outputting a phase change signal for a present horizontal period; e) adding said phase error signal and said phase change signal; and f) receiving an output of said adding means and generating a clock signal which is synchronized with said input composite video signal.

By the features of the present invention, the clock signal generator according to the present invention does not require additional circuits such as a standard/non-standard signal detector and the like, and can improve the image quality of the input video signal by simultaneously using a line lock method and a burst lock method to accurately synchronize an input video signal with a generated clock signal.

BRIEF DESCRIPTION OF THE DRAWINGS

The above objects, other features and advantages of the present invention will be more apparent after a reading of the following detailed description taken in conjunction with the drawings in which:

    Fig. 1 is a block diagram showing a conventional burst lock clock generator of the prior art;
    Fig. 2 is a block diagram showing a conventional line lock clock generator of the prior art;
    Fig. 3 is a block diagram showing a conventional line lock/burst lock clock generator of the prior art;
    Fig. 4 is a block diagram of a clock signal generator in accordance with an embodiment of the present invention; and
    Fig. 5 is a drawing illustrating input video signals.

DETAILED DESCRIPTION OF THE INVENTION

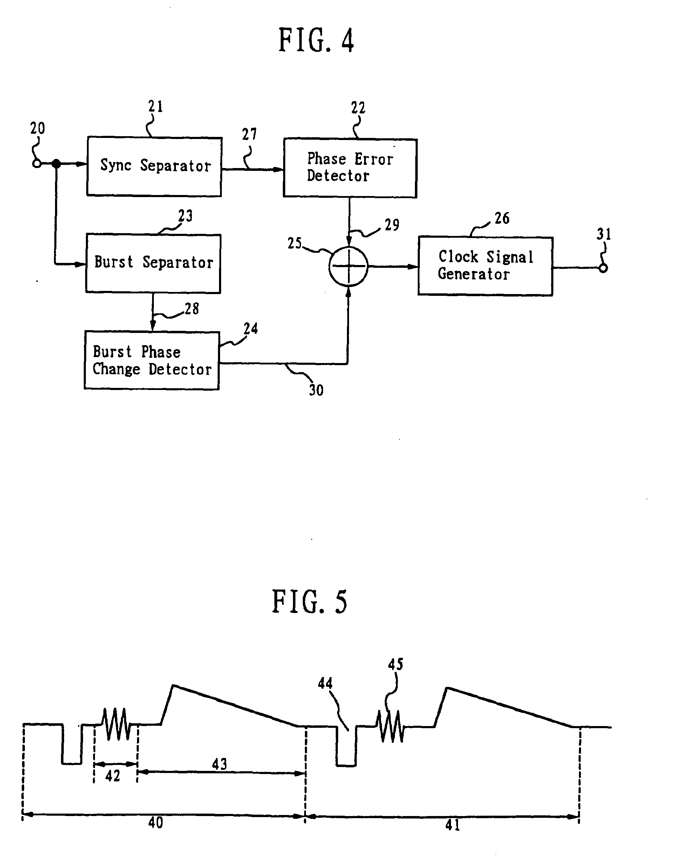

Hereinafter, a clock signal generator in accordance with an embodiment of the present invention will be described with reference to Fig. 4.

The clock signal generator of the present invention includes a synchronizing separator 21, a phase error detector 22, a burst separator 23, a burst phase change detector 24, an adder 25, and a clock signal generator 26. The reference numeral 20 designates a video signal input terminal, 27 a horizontal synchronizing signal, 28 a color burst signal, 29 a phase error, 30 a phase change, and 31 a clock signal output terminal.

The synchronizing separator 21 separates the horizontal synchronizing signal 27 from an input composite video signal supplied through the video signal input terminal 20. The burst separator 23 separates the color burst signal 28 from the input composite video signal supplied through the video signal input terminal 20. The phase error detector 22 receives the horizontal synchronizing signal 27 and detects a phase difference between the input composite video signal and a standard video signal. The burst phase change detector 24 detects frequency change of the color burst signal 28.

The reason why the frequency change of the color burst signal 28 is detected, is as follows. When the input composite video signal is a non-standard video signal, period of line is irregularly changed due to noise which is produced by various causes. Accordingly, the equation mentioned in the preface of this specification can not be satisfied with. Period change for a portion of an input composite video signal which is to be successively inputted, can be estimated by detecting a phase difference between the start point and the end point of the color burst signal, in consideration of the fact that a color burst signal exists at a front portion in a line of an input composite video signal. That is, if period of an input composite video signal is increased or decreased in every line, a color burst signal contained in every line of an input composite video signal is also increased or decreased. Therefore, by the fact that a color burst signal exists at a front portion in a line of an input composite video signal, period change of the input composite video signal which is to be successively inputted can be evaluated by detecting a phase change of the color burst signal. The phase error detector 22 detects a phase difference between the previously inputted composite video signal and the standard video signal, by using the horizontal synchronizing signal 27. The adder 25 adds the phase error 29 which is detected from the previously inputted composite video signal and the color burst signal phase change detected from a presently inputted composite video signal. The clock pulse generator 26 receives the output signal of the adder 25, and generates a clock signal which is synchronized with the input composite video signal.

Referring to Fig. 5, there is illustrated input composite video signals supplied through the video signal input terminal 20. The reference numeral 40 designates a previously inputted horizontal line signal, 41 a presently inputted horizontal line signal, 42 and 45 color burst signals each of which is contained in the previously inputted horizontal line signal 40 and the presently inputted horizontal line signal 41, respectively, 43 an active video area contained in the previously inputted horizontal line signal 40, and 44 a horizontal synchronizing signal contained in the presently inputted horizontal line signal. The active video area 43 provides an active video data.

The operation of the circuit shown in Fig. 4 will be fully described in below with reference to Fig. 5.

The synchronizing separator 21 separates the horizontal synchronizing signal from the input composite video signal. The burst separator 23 separates the coloc burst signal 45 contained in the input composite video signal. The phase error detector 22 detects a phase error between the horizontal synchronizing signal and a next horizontal synchronizing signal as a phase error for a previous horizontal period, and the detected phase error is transferred to the adder 25 at the time when the horizontal synchronizing signal is separated. After the color burst signal 45 is inputted, the burst phase change detector 24 evaluates a phase change between the front end and the rear end of the color burst signal 45. The phase change is used to evaluate a phase change of a present horizontal period. The adder 25 sums up the phase change 30 for a present horizontal period and the phase error 29 for a previous horizontal period. The clock signal generator 26 receives the output signal of the adder 25, evaluates an average thereof, and generates the clock signal which is synchronized with the input composite video signal. The clock signal is inputted to the signal processor to be used in processing the input video signal.

Accordingly, the clock signal generator according to the present invention does not require additional circuits such as a standard/non-standard signal detector and the like, and can improve the image quality of an input video signal by simultaneously using a line lock method and a burst lock method to accurately synchronize the input composite video signal with a generated clock signal.

While the present invention has been described and illustrated with reference to a preferred embodiment thereof, it is to be readily understood that the present invention is not limited to the embodiment, and various changes and modifications can be made therein without departing from the scope of the invention defined in the appended claims.

## Claims

1. A clock signal generator comprising:

    a) synchronizing separation means (21) for separating a horizontal synchronizing signal (27) from an input composite video signal (20);
    b) burst separation means (23) for separating a color burst signal (28) from said input composite video signal (20); **characterised by**
    c) phase error detection means (22) for receiving said horizontal synchronizing signal (27), detecting a phase error between a previously inputted composite video signal and a standard video signal, and outputting a phase error signal (29) for a previous horizontal period;
    d) phase change detection means (24) for receiving said color burst signal (28), detecting a phase change of said color burst signal (28) by evaluating a phase change between the front end and the rear end of the color burst signal, and outputting a phase change signal (30) for a present horizontal period;
    e) adding means (25) for adding said phase error signal (29) and said phase change signal (30); and
    f) clock signal generation means (26) for receiving an output of said adding means (25) and generating a clock signal (31) which is synchronized with said input composite video signal.

2. A clock signal generator as claimed in Claim 1, wherein said clock signal generation means evaluates an average value of said output of the said adding means, and generates said clock signal in response to said average value.

3. A clock signal generator as claimed in claim 1, wherein said phase error signal includes information relating to phase error between each succeeding horizontal synch pulse.

4. A clock signal generator as claimed in claim 3, wherein said phase change signal includes information related to the phase change in the color burst signal in each horizontal line signal.

5. A method for generating a clock signal synchronized with a composite video signal having a horizontal synchronizing signal and a color burst signal, said method comprising the steps of:

    a) separating a horizontal synchronizing signal (27) from an input composite video signal (20);
    b) separating a color burst signal (28) from said input composite video signal (20); **characterised by** the steps of:
    c) receiving said horizontal synchronizing signal (27), detecting a phase error between a previously inputted composite video signal and a standard video signal, and outputting a phase error signal (29) for a previous horizontal period;
    d) receiving said color burst signal (28), detecting a phase change of said color burst signal (28) by evaluating a phase change between the front end and the rear end of the color burst signal, and outputting a phase change signal (30) for a present horizontal period;
    e) adding said phase error signal (29) and said phase change signal (30); and
    f) receiving an output of said adding means (25) and generating a clock signal (31) which is synchronized with said input composite video signal

**6.** A method as claimed in claim 5, wherein the step of generating the clock signal comprises the step of evaluating an average value of said output of the adding step, and generating said clock signal in response to said average value.

**7.** A method as claimed in claim 5, wherein said phase error signal includes information relating to phase error between each succeeding horizontal synch pulse.

**8.** A method as claimed in claim 7, wherein said phase change signal includes information related to the phase change in the color burst signal in each horizontal line signal.

**Patentansprüche**

**1.** Taktsignalgenerator, umfassend:

a) eine Impulstrennvorrichtung (21), die ein Horizontalsynchronisiersignal (27) aus einem eingegebenen zusammengesetzten Videosignal (20) abtrennt;
b) eine Burstabtrennvorrichtung (23), die ein Farbburstsignal (28) von dem eingegebenen zusammengesetzten Videosignal (20) abtrennt; **gekennzeichnet durch**
c) eine Phasenfehler-Erfassungsvorrichtung (22), die das Horizontalsynchronisiersignal (27) empfängt, einen Phasenfehler zwischen einem vorher eingegebenen zusammengesetzten Videosignal und einem Standardvideosignal erkennt und ein Phasenfehlersignal (29) für eine vorhergehende Zeilenperiode ausgibt;
d) eine Phasenänderungs-Erfassungsvorrichtung (24), die das Farbburstsignal (28) empfängt, eine Phasenänderung des Farbburstsignals (28) durch das Bewerten einer Phasenänderung zwischen dem vorderen Ende und dem hinteren Ende des Farbburstsignals erfasst und ein Phasenänderungssignal (30) für eine aktuelle Zeilenperiode ausgibt;
e) eine Addiervorrichtung (25), die das Phasenfehlersignal (29) und das Phasenänderungssignal (30) addiert; und
f) eine Taktsignal-Erzeugungsvorrichtung (26), die ein Ausgangssignal der Addiervorrichtung (25) empfängt und ein Taktsignal (31) erzeugt, das mit dem eingegebenen zusammengesetzten Videosignal synchronisiert ist.

**2.** Taktsignalgenerator nach Anspruch 1, worin die Taktsignal-Erzeugungsvorrichtung einen Mittelwert des Ausgangssignals der Addiervorrichtung bewertet und das Taktsignal abhängig von dem Mittelwert erzeugt.

**3.** Taktsignalgenerator nach Anspruch 1, worin das Phasenfehlersignal Information bezüglich des Phasenfehlers zwischen jedem aufeinander folgenden Horizontalsynchronisierimpuls enthält.

**4.** Taktsignalgenerator nach Anspruch 3, worin das Phasenänderungssignal Information bezüglich der Phasenänderung im Farbburstsignal in jedem Zeilensignal enthält.

**5.** Verfahren zum Erzeugen eines Taktsignals, das zu einem zusammengesetzten Videosignal synchronisiert ist, das ein Horizontalsynchronisiersignal und ein Farbburstsignal aufweist, wobei das Verfahren die Schritte umfasst:

a) Abtrennen eines Horizontalsynchronisiersignals (27) von einem eingegebenen zusammengesetzten Videosignal (20);
b) Abtrennen eines Farbburstsignals (28) von dem eingegebenen zusammengesetzten Videosignal (20); **gekennzeichnet durch** die Schritte:
c) Empfangen des Horizontalsynchronisiersignals (27), Erfassen eines Phasenfehlers zwischen einem vorher eingegebenen zusammengesetzten Videosignal und einem Standardvideosignal, und Ausgeben eines Phasenfehlersignals (29) für eine vorhergehende Zeilenperiode;
d) Empfangen des Farbburstsignals (28), Erfassen einer Phasenänderung des Farbburstsignals (28) **durch** das Bewerten einer Phasenänderung zwischen dem vorderen Ende und dem hinteren Ende des Farbburstsignals, und Ausgeben eines Phasenänderungssignals (30) für eine aktuelle Zeilenperiode;
e) Addieren des Phasenfehlersignals (29) und des Phasenänderungssignals (30); und
f) Empfangen eines Ausgangssignals der Addiervorrichtung (25) und Erzeugen eines Taktsignals (31), das mit dem eingegebenen zusammengesetzten Videosignal synchronisiert ist.

**6.** Verfahren nach Anspruch 5, worin der Schritt des Erzeugens des Taktsignals den Schritt des Bewertens eines Mittelwerts des Ausgangssignals des Addierschritts umfasst, und das Taktsignal abhängig von dem Mittelwert erzeugt wird.

**7.** Verfahren nach Anspruch 5, wobei das Phasenfehlersignal Information bezüglich des Phasenfehlers zwischen jedem aufeinander folgenden Horizontalsynchronisierimpuls enthält.

**8.** Verfahren nach Anspruch 7, wobei das Phasenänderungssignal Information bezüglich der Phasenänderung im Farbburstsignal in jedem Zeilensignal enthält.

## Revendications

**1.** Générateur de signal d'horloge comprenant:

a) un moyen de séparation de synchronisation (21) pour séparer un signal de synchronisation horizontal (27) d'un signal vidéo composite d'entrée (20);

b) un moyen de séparation de salves (23) pour séparer un signal de salve couleur (28) dudit signal vidéo composite d'entrée (20); **caractérisé par**

c) un moyen de détection d'erreur de phase (22) pour recevoir ledit signal de synchronisation horizontal (27), détecter une erreur de phase entre un signal vidéo composite entré préalablement et un signal vidéo standard, et émettre un signal d'erreur de phase (29) pour une période horizontale précédente;

d) un moyen de détection de changement de phase (24) pour recevoir ledit signal de salve couleur (28), détecter un changement de phase dudit signal de salve couleur (28) en évaluant un changement de phase entre l'extrémité avant et l'extrémité arrière du signal de salve couleur, et émettre un signal de changement de phase (30) pour une période horizontale présente;

e) un moyen d'addition (25) pour additionner ledit signal d'erreur de phase (29) et ledit signal de changement de phase (30); et

f) un moyen de génération de signal d'horloge (26) pour recevoir une sortie dudit moyen d'addition (25) et pour produire un signal d'horloge (31) qui est synchronisé avec ledit signal vidéo composite d'entrée.

**2.** Générateur de signal d'horloge selon la revendication 1, où ledit moyen de génération de signal d'horloge évalue une valeur moyenne de ladite sortie dudit moyen d'addition, et produit ledit signal d'horloge en réponse à ladite valeur moyenne.

**3.** Générateur de signal d'horloge selon la revendication 1, où ledit signal d'erreur de phase comprend des informations se rapportant à l'erreur de phase entre chaque impulsion de synchronisation horizontale qui se succèdent.

**4.** Générateur de signal d'horloge selon la revendication 3, où ledit signal de changement de phase comprend des informations se rapportant au changement de phase dans le signal de salve couleur dans chaque signal de ligne horizontale.

**5.** Procédé de génération d'un signal d'horloge synchronisé avec un signal vidéo composite ayant un signal de synchronisation horizontale et un signal de salve couleur, ledit procédé comprenant les étapes consistant à:

a) séparer un signal de synchronisation horizontale (27) d'un signal vidéo composite d'entrée (20);

b) séparer un signal de salve couleur (28) dudit signal vidéo composite d'entrée (20); **caractérisé par** les étapes consistant à:

c) recevoir ledit signal de synchronisation horizontal (27), détecter une erreur de phase entre un signal vidéo composite entré préalablement et un signal vidéo standard, et émettre un signal d'erreur de phase (29) pour une période horizontale précédente;

d) recevoir ledit signal de salve couleur (28), détecter un changement de phase dudit signal de salve couleur (28) en évaluant un changement de phase entre l'extrémité avant et l'extrémité arrière du signal de salve couleur, et émettre un signal de changement de phase (30) pour une période horizontale présente;

e) additionner ledit signal d'erreur de phase (29) et ledit signal de changement de phase (30); et

f) recevoir une sortie dudit moyen d'addition (25) et produire un signal d'horloge (31) qui est synchronisé avec ledit signal vidéo composite d'entrée.

**6.** Procédé selon la revendication 5, où l'étape de génération du signal d'horloge comprend l'étape consistant à évaluer une valeur moyenne de ladite sortie de l'étape d'addition, et à produire ledit signal d'horloge en réponse à ladite valeur moyenne.

**7.** Procédé selon la revendication 5, où ledit signal d'erreur de phase comprend les informations se rapportant à une erreur de phase entre chaque impulsion de synchronisation horizontale qui se suit.

**8.** Procédé selon la revendication 7, où ledit signal de changement de phase comprend des informations se rapportant au changement de phase dans le signal de salve couleur dans chaque signal de ligne horizontale.

# FIG. 1 (Prior Art)

```
1 o──●──────→┌──────────────┐  5          ┌──────────────┐      o 11
     │       │  Burst lock  │──┬──────────→│ Sync Signal  │──────
     │       │Clock Generator│  │          │  Generator   │    9
     │       └──────────────┘  │4         └──────────────┘
     │              4           │
     │                          │          ┌──────────────┐      o 12
     │                          └─────────→│    Signal    │──────
     │                                     │  Processor   │    10
     └────────────────────────────────────→│              │
                                           └──────────────┘
```

# FIG. 2 (Prior Art)

```
1 o──●──────→┌──────────────┐  3          ┌──────────────┐      o 11
     │       │  Line lock   │──┬──────────→│ Sync Signal  │──────
     │       │Clock Generator│  │          │  Generator   │    9
     │       └──────────────┘  │2         └──────────────┘
     │              2           │
     │                          │          ┌──────────────┐      o 12
     │                          └─────────→│    Signal    │──────
     │                                     │  Processor   │    10
     └────────────────────────────────────→│              │
                                           └──────────────┘
```

# FIG. 3 (Prior Art)

# FIG. 4

# FIG. 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 62268274 A
- JP 63193783 A

- US 5025310 A